Europäisches Patentamt

(19) European Patent Office

Office européen des brevets

(11) Numéro de publication: **0 018 883**
**B1**

(12) FASCICULE DE BREVET EUROPEEN

(45) Date de publication du fascicule du brevet:
08.12.82

(51) Int. Cl.³: **B 01 J 3/04**, C 08 F 2/34,
C 08 F 10/02

(21) Numéro de dépôt: 80400520.5

(22) Date de dépôt: 18.04.80

(54) Procédé pour réduire les risques d'inflammation et d'explosion résultant de la décomposition de l'éthylène sous haute pression et dispositif pour la mise en oeuvre dudit procédé.

(30) Priorité: 25.04.79 FR 7910444

(43) Date de publication de la demande:
12.11.80 Bulletin 80/23

(45) Mention de la délivrance du brevet:
08.12.82 Bulletin 82/49

(84) Etats contractants désignés:
AT BE CH DE GB IT LI LU NL SE

(56) Documents cités:
FR-A-2 116 147
CHEMIE-INGENIEUR-TECHNIK, Tôme 51, janvier
1979, Weinheim DE, E. W. SCHOLL et al.: »Vorbeugende und konstruktive Schutzmaßnahmen gegen
Gas- und Staubexplosionen«, pages 8—14.
CHEMICAL ABSTRACTS, vol. 78, no. 16, 23 avril
1973, ref 99577p, page 120, Columbus, Ohio, US,
J. J. L. MARZAIS: »Water injecting device for
high pressure gases«

(73) Titulaire: Société Chimique des Charbonnages, Tour
Aurore Place des Reflets Cédex no 5, F-92080 Paris La
Défense 2 (FR)

(72) Inventeur: Nardi, Alain, 62, rue A. Damboise,
F-76210 Bolbec (FR)
Inventeur: Simier, Jean-Noel, Le Point du Jour NB 1,
F-57500 Saint Avold (FR)

(74) Mandataire: Dubost, Thierry, Société Chimique des
Charbonnages Service Propriété Industrielle B.P. No 1,
F-62160 Bully Les Mines (FR)

## Procédé pour réduire les risques d'inflammation et d'explosion résultant de la décomposition de l'éthylène sous haute pression et dispositif pour la mise en oeuvre dudit procédé

La présente invention concerne un procédé pour réduire les risques d'inflammation et d'explosion résultant de la décomposition de l'éthylène dans une installation de polymérisation sous haute pression, ainsi qu'un dispositif pour la mise en oeuvre dudit procédé.

Il est bien connu que, au cours de la réaction de polymérisation de l'éthylène sous haute pression (300 à 3000 bars environ) et à haute température (150°C à 350°C environ), certains incidents de fonctionnement tels que des défaillances mécanisques ou une pureté insuffisante de l'éthylène gazeux peuvent, malgré le contrôle attentif des indicateurs de pression et de température, provoquer l'échauffement jusqu'à une température supérieure à 450°C environ d'une fraction, même infime, de l'éthylène contenu dans le réacteur de polymérisation ou dans le séparateur (fonctionnant habituellement sous une pression de 100 à 500 bars). Un tel échauffement suffit à initier la décomposition de cette fraction d'éthylène en un mélange de carbone, d'hydrogène et de méthane. De plus, les conditions précitées de fonctionnement des réacteur et séparateur sont telles qu'elles permettent une propagation rapide de toute décomposition initiée, conduisant invariablement à l'élévation rapide de la pression et/ou la température. La rupture d'au moins un organe (disque, soupape, vanne) de protection protège les réacteur et séparateur contre les suppressions et permet aux produits de décomposition de s'échapper vers l'extérieur. Outre le phénomène de pollution causé par le rejet à l'extérieur de carbone pulvérulent, on doit surtout redouter l'inflammation des gaz de dé composition qui est à l'origine d'explosions violentes pouvant occasionner des dégats matériels et humains.

Contre cette inflammation et ses conséquences néfastes, plusieurs solutions cherchant à satisfaire aux exigences de sécurité lors de la détente d'installations de polymérisation sous haute pression ont déjà été proposées, notamment par les brevets français n° 2.116.147, 2.165.018 et 2.358.427 et par les demandes de brevet japonais n° 48-51.336/73 et 48-51.337/73 déposées le 9 Mai 1973. Ces solutions ont toutes en commun de remédier à l'une au moins des trois conditions supposées de l'inflammation des gaz de décomposition: pression élevée, température élevée, vitesse supersonique des gaz. Elles consistent donc le plus souvent à refroidir par différents moyens les gaz de décomposition dont la température initiale est, comme on l'indique plus haut, supéreure à 450°C et peut atteindre jusqu'à 1500°C. Accessoirement il est proposé, en vue d'éviter la pollution de l'atmosphère environnante par les gaz de décomposition, d'abaisser la pression et/ou d'abaisser la vitesse des gaz en-dessous de la vitesse du son. En bref, toutes ces solutions sont basées sur l'hypothèse formulée dans le brevet français n° 2.116.147, selon laquelle le problème de l'inflammation des gaz de décomposition se résumerait au problème de l'auto-inflammation de ces gaz par l'effet de leur propre température élevée.

Or la demanderesse vient de faire la découverte surprenante que, contrairement à l'enseignement de la technique actuelle, l'auto-inflammation des gaz de décomposition par l'effect de leur propre température élevée ne constitue pas nécessairement la cause principale de l'inflammation de ces gaz et n'en constitue même le plus souvent qu'une cause secondaire. Cette découverte résulte d'expériences effectuées, en l'absence de décomposition dans le réacteur, par des essais de rupture d'au moins un organe de protection, la température de l'éthylène à l'instant précédant la rupture ne dépassant pas 200°C. Ces expériences ont montré que, malgré l'absence d'échauffement anormal avant la rupture de l'organe, on observe l'émission de gaz enflammé à la sortie de la conduite d'évacuation (cheminée) et on peut mettre en évidence l'existence d'une onde de choc se propageant à une vitesse de 500 à 700 m/s environ. Il semble que l'on puisse expliquer le phénomène observé de la façon suivante: après la rupture de l'organe de protection, l'air contenu dans la conduite d'évacuation (cheminée) et initialement au repos est parcouru par une onde de pression se déplaçant à une vitesse fonction de son intensité et supérieure à la vitesse du son dans le milieu. Cette onde de pression, qui précède donc l'écoulement de l'éthylène ou des gaz de décomposition dans la conduite d'évacuation, comprime et échauffe l'air contenu dans ladite conduite. De plus, étant donné que la conduire d'évacuation n'est généralement pas intégralement linéaire mais comporte au moins soit une section courbée reliant la paroi latérale du réacteur ou séparateur à la section verticale de la cheminée soit une variation de section, l'onde de pression n'est généralement pas plane et peut donc se réfléchir sur les parois de la conduite d'évacuation; ces réflexions de l'onde rendent possibles des focalisations d'ondes sur l'axe de symétrie de ladite conduite et donc l'échauffement de points particuliers dans la conduite d'évacuation. Enfin la possibilité de réflexions successives du disque de protection sur les parois de la cheminée constitue une troisième cause d'échauffements locaux accompagnant l'échauffement par l'onde de pression et y ajoutant leurs effets.

Les phénomènes d'échauffement qui viennent d'être décrits suffisent, en l'absence de toute décomposition de l'éthylène, à porter la température en des points particuliers de la cheminée à plus de 600°C. Les phénomènes de diffusion, les différences de vitesse du gaz en écoulement dans la cheminée entre les parois de celle-ci et son axe de symétrie, les variations de section et les changements de direction de la cheminée contribuent localement à la formation de zones de pré-mélange de l'air et du gaz. C'est à l'interface air chaud-éthylène, qui se déplace à une vitesse inférieure à l'onde de pression et qui succède donc à cette onde, et plus précisément au niveau de ces zones de pré-mélange, que s'initie l'inflammation. Les zones de pré-mélange sont ensuite entraînées par la vidange vers l'extérieur de la cheminée; elles disparaissent donc rapidement dans la cheminée lors du remplacement de l'air par le gaz. De même la flamme est portée par l'écoulement vers la section de sortie de la cheminée où elle se maintient le temps de la vidange complète. L'inflammation de gaz par l'effet d'onde de pression qui vient d'être décrit est favorisée par une température élevée dudit gaz, celle-ci ayant pour effet d'accroître la température du mélange air-gaz et par suite un gaz de décomposition est susceptible de s'enflammer par l'effet d'onde de pression plus aisément que de l'éthylène à 200°C. Cet accroissement de la température du mélange air-gaz fait ainsi apparaître l'auto-inflammation des gaz de décomposition par l'effet de leur propre température, jadis considérée comme la cause première des inflammations, comme une cause dérivée et secondaire de l'effet d'onde de pression.

Ceci explique que toutes les solutions de l'art antérieur au problème des inflammations, décrites dans les brevets déjà cités, aient eu pour objet de refroidir les gaz de décomposition soit au stade de leur vidange vers l'extérieur soit au stade de leur récupération. Ces solutions ne prenaient donc pas suffisamment en compte le paramètre temporel du phénomène depuis l'ouverture de l'organe de protection jusqu'à la fin de la vidange. Ce paramètre s'est portant révélé, d'après les travaux de la demanderesse, être d'une importance cruciale. En effet les brevets cités indiquent que la durée de la vidange est généralement comprise entre 3 et 10 secondes et le brevet français n° 2.116.147 indique que le temps écoulé entre l'ouverture de l'organe de protection et le moment où le gaz arrive au dispositif de refroidissement est compris entre 50 et 100 millisecondes environ. Il n'est pas étonnant dans ces conditions que l'efficacité des solutions de l'art antérieur ait été unsuffisante puisque, selon les observations de la demanderesse, la durée de la phase instationnaire de l'écoulement donnant lieu à l'effet d'onde de pression est le plus souvent inférieure ou égale à 25 millisecondes. Il résulte de la découverte de la nature et de la durée de la cause première des inflammations résultant de la décomposition de l'éthylène dans une installation de polymérisation sous haute pression que l'efficacité d'un procédé et d'un dispositif pour en réduire les risques ne dépend pas tant de la puissance des moyens mis en oeuvre que de l'instant auquel ils sont mis en oeuvre. En particulier il faut noter que le procédé de récupération des produits de décomposition décrit dans le brevet français n° 2.358.427 est d'une efficacité très aléatoire lorsque les risques d'inflammation n'ont pas été supprimés dès la sortie du réacteur ou séparateur. D'autre part les solutions de l'art antérieur ne prennent pas en compte le fait que le débit des gaz de décomposition provenant de l'enceinte sous pression varie dans le temps au cours de la vidange pendant et après la phase instationnaire de celle-ci. Ce phénomène a pourtant, d'après les travaux de la demanderesse, une influence cruciale sur le choix de la méthode optimale de refroidissement des gaz de décomposition comme on le verra ci-après.

Un premier but de l'invention consiste à réduire les risques d'inflammation et d'explosion résultant de la décomposition de l'éthylène sous haute pression, en particulier ceux survenant au cours de la phase instationnaire d'écoulement des gaz de décomposition. Un second but de l'invention consiste à déterminer une méthode optimale de refroidissement desdits gaz. Un troisième but de l'invention consiste à réduire les risques d'inflammation et d'explosion au cours de l'écoulement desdits gaz à un point tel que la récupération desdits gaz, notamment en vue d'éviter toute pollution, puisse être effectuée de manière parfaitement sûre.

Les buts précités peuvent être atteints au moyen du procédé selon l'invention, selon lequel les gaz de décomposition sont refroidis par l'injection, dans le circuit d'évacuation desdits gaz, d'un liquide inerte de chaleur de vaporisation élevée et le refroidissement des gaz de décomposition commence à s'effectuer avec un temps de retard, par rapport au début de l'écoulement desdits gaz en dehors de l'enceinte sous pression, qui n'est pas supérieur à 25 millisecondes mais qui est inférieur ou égal au temps de parcours moyen des gaz entre l'organe de protection de l'enceinte sous pression et l'endroit où s'effectue le refroidissement des gaz. Le procédé selon l'invention consiste aussi, selon un mode de réalisation préféré, à injecter ledit liquide inerte selon un débit massique variable dans le temps et qui reste à tout instant de la vidange, pendant et après la phase instationnaire de celle-ci, supérieur au débit massique des gaz de décomposition provenant de l'enceinte sous pression. De façon encore préférée, le liquide inerte de chaleur de vaporisation élevée contenu dans un réservoir sera surmonté par une phase de gaz inerte sous pression comprise entre 5 et 50 bars et le débit massique Q de liquide inerte injecté dans le circuit d'évacuation des gaz de décomposition variera en fonction du temps t selon la loi:

$$Q = Q_{e,o} \left( 1 + \frac{y_g + 2}{2} \cdot \frac{Q_{e,o}}{\rho V_o} t \right)^{-\frac{y_g}{y_g + 2}}$$

$Q_{e,o}$ étant le débit massique initial des gaz de décomposition provenant de l'enceinte sous pression,

$\gamma$g étant le coefficient de la loi des gaz parfaits de gaz inerte surmontant le liquide inerte,

$V_o$ étant le volume initial de la phase gazeuse surmontant le liquide inerte, et

$\varrho$ étant la masse volumique du liquide inerte.

Enfin il est préféré que le volume initial de la phase gazeuse surmontant le liquide inerte ne soit pas choisi de façon quelconque en fonction du débit massique initial des gaz de décomposition provenant de l'enceinte sous pression, mais que le rapport $Q_{e,o}/V_o$ soit compris entre 0,3 et 5 t/s/m3. Ce rapport sera plus élevé lorsque l'enceinte est un réacteur de polymérisation (fonctionnant sous 300 à 3000 bars environ) que lorsque l'enceinte est un séparateur (fonctionnant sous 100 à 500 bars environ).

Par liquide inerte au sens de l'invention il faut entendre un composé chimique non réactif vis-à-vis de l'éthylène et des gaz de décomposition et se présentant liquide dans les conditions usuelles de pression, c'est-à-dire lorsque la pression ne dépasse pas 50 bars environ. Le liquide inerte de chaleur de vaporisation élevée est de préférence l'eau mais peut aussi être un hydrocarbure halogéné. Par gaz inerte constituant la phase surmontant le liquide inerte dans son réservoir, il faut entendre selon l'invention un gaz ou un mélange de gaz substantiellement exempt de gaz capables de réagir soit avec les gaz de décomposition (méthane, hydrogène, éthylène) soit avec le liquide inerte, et en particulier substantiellement exempt d'oxygène. Un tel gaz sera par exemple choisi parmi l'azote, le dioxyde de carbone, l'éthylène ou un gaz rare de l'air (hélium, argon, néon, krypton, xénon).

Le procédé selon l'invention décrit ci-dessus peut être aisément mis en oeuvre au moyen du dispositif selon l'invention comprenant:

— un premier réservoir rempli d'un gaz inerte sous une pression P comprise entre 5 et 50 bars environ,

— un second réservoir raccordé au premier réservoir étant totalement rempli d'un liquide inerte de chaleur de vaporisation élevée,

— une conduite de liaison de longueur $L_o$ et de section $S_o$, disposée entre le second réservoir et le volume dans lequel l'éthylène décomposé provenant de l'enceinte sous pression est évacué, dont l'extrémité proche dudit volume est munie d'un adispositif disperseur de liquide inerte, et

— une vanne de section $S_1$ et de longueur $L_1$, disposée entre le premier réservoir et le dispositif disperseur de liquide inerte, dont l'ouverture est commandée par un dispositif détecteur de l'ouverture d'un organe de protection de l'enceinte sous pression et commande le fonctionnement du dispositif disperseur.

La vanne du dispositif selon l'invention peut être une vanne du type hydraulique ou, de préférence, du type pyrotechnique. Ce dernier type de vanne est préféré en raison de son temps de réponse très court, de l'ordre de 5 millisecondes. Elle peut être disposée soit sur la liaison raccordant les deux réservoirs soit, de préférence, entre le second réservoir et le dispositif disperseur.

Il faut bien comprendre que, étant donné que chacun des deux réservoirs est totalement rempli d'un composé (gaz ou liquide) qui lui est affecté, la matérialité de deux réservoirs distincts n'est pas indispensable au bon fonctionnement du dispositif selon l'invention. Ainsi l'ensemble des deux réservoirs raccordés par une liaison courte et de section importante peut, tout en restant dans le cadre de l'invention, être remplacé par un réservoir unique dans lequel le liquide inerte est surmonté par une phase de gaz inerte sous une pression comprise entre 5 et 50 bar. Que les deux réservoirs soient distincts ou bien réunis en un seul, il est préférable que le volume du liquide inerte représente de 50 à 80% du volume total des phases liquide et gazeuse contenues dans l'ensemble des deux réservoirs.

Le dispositif selon l'invention tel que décrit ci-dessus permet d'injecter le liquide inerte, par le moyen du dispositif disperseur, selon un débit massique variable dans le temps selon la loi définie précédemment. Le débit massique initial des gaz de décomposition provenant de l'enceinte sous pression étant connu, le liquide inerte et le gaz inerte étant choisis, ainsi que le volume $V_o$ du premier réservoir ou de la phase gazeuse contenue dans le réservoir unique, cette loi est parfaitement définie. En outre afin que le temps de retard, par rapport au début de l'écoulement des gaz de décomposition en dehors de l'enceinte sous pression, avec lequel le refroidissement desdits gaz commence à s'effectuer ne soit pas supérieur à 25 millisecondes, il faut (compte tenu du temps de réponse de l'ordre de 5 millisecondes de la vanne du dispositif) que le temps de mise en vitesse du liquide inerte ne soit pas supérieur à 20 millisecondes. Pour obtenir un tel résultat, il a été trouvé que les géométries de la conduite de liaison et de la vanne du dispositif doivent être reliées entre elles et avec le débit massique initial $Q_o$ de liquide inerte délivré par le dispositif de telle sorte que

$$Q_o \left( \frac{L_o}{S_o} + \frac{L_1}{S_1} \right)$$

ne soit pas supérieur à 22 t/m/s.

Compte tenu de la vitesse d'écoulement des gaz de décomposition et de l'emplacement généralement choisi pour le dispositif disperseur dans le circuit d'évacuation desdits gaz, il est en général suffisant que le temps de mise en vitesse du liquide soit compris entre 5 et 20 millisecondes et, par suite que

$$Q_o \left( \frac{L_o}{S_o} + \frac{L_1}{S_1} \right)$$

soit compris entre 5,5 et 22 t/m/s.

Comme on le comprend bien d'après la loi de variation en fonction du temps précédemment définie, le débit massique initial $Q_o$ de liquide inerte délivré par le dispositif selon l'invention est égal au débit massique initial $Q_{e,o}$ des gaz de décomposition provenant de l'enceinte sous pression.

Le dispositif disperseur de liquide situé à l'extrémité de la conduite de liaison et à proximité du circuit d'évacuation des gaz de décomposition peut être de différents types. Il peut s'agir par exemple d'un dispositif tel que celui décrit dans le brevet français n° 2 165 018, ou bien d'un dispositif du type pomme d'arrosoir comportant un ensemble d'orifices de section totale S. Dans ce dernier cas il est préférable que ladite section S soit choisie, en fonction du débit massique initial $Q_o$, de la pression P de la phase gazeuse inerte et de la masse volumique $P$ du liquide inerte de manière telle que

$$\frac{S\sqrt{\rho P}}{Q_o}$$

soit compris entre 1 et 1,4, S, P, $\varrho$ et $Q_o$ étant exprimés en unités de système international.

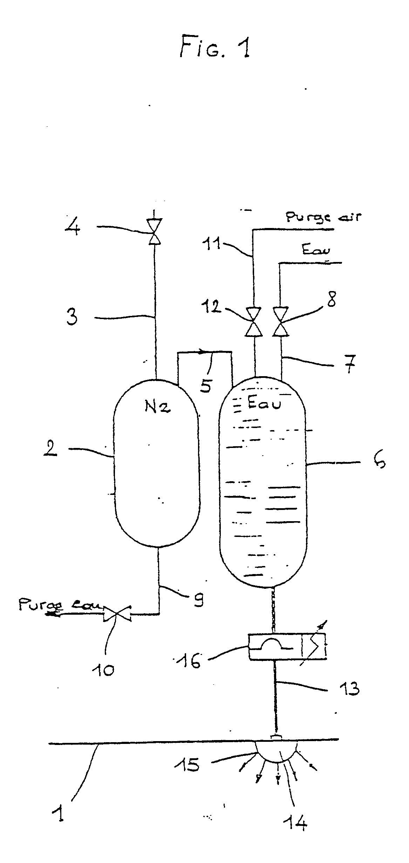

L'invention sera mieux comprise grâce à l'illustration du mode de réalisation représenté sur la figure unique en annexe. Selon ce mode de réalisation, 1 désigne la paroi du circuit d'évacuation des gaz de décomposition dont on veut assurer le refroidissement. Le premier réservoir 2 est maintenu sous pression d'azote par un circuit de distribution d'azote 3 muni d'une vanne 4. Ce réservoir est raccordé par une liaison courte et de section importante 5 au second réservoir 6 maintenu totalement rempli d'eau par un circuit de distribution d'eau 7 muni d'une vanne 8. Pour le cas où se produirait une remontée d'eau par la liaison 5 vers le réservoir 2, le fond de celui-ci comporte un circuit de purge 9 muni d'une vanne 10. De la même façon, le sommet du réservoir 6 comporte un circuit de purge d'air 11 muni d'une vanne 12. Une conduite de liaison 13 aussi courte que possible est disposée entre le fond du réservoir 6 et la paroi 1. L'extrémité de cette conduite est munie d'un dispositif disperseur 14 comportant un ensemble d'orifices 15. Entre le fond du réservoir 6 et le dispositif disperseur 14 est disposée une vanne pyrotechnique 16 dont l'ouverture est commandée par un dispositif détectant la décomposition de l'éthylène. Ce dernier dispositif, constitué par un détecteur de rupture d'un disque de protection de l'enceinte sous pression à partir de laquelle les gaz de décomposition sont évacués, n'est pas représenté sur la figure, non plus d'ailleurs que le circuit le reliant à la vanne 16.

Le procédé selon l'invention peut avantageusement être associé, en vue de réduire encore les risques d'inflammation et d'explosion à un procédé consistant à maintenir sous atmosphère d'un gaz inerte la plus grande partie du circuit d'évacuation des gaz de décomposition, et en particulier la partie de ce circuit où le dispositif selon l'invention a été disposé. Des gaz inertes acceptables pour maintenir ladite atmosphère, on donne ici la même définition que précédemment. Le gaz inerte constituant ladite atmosphère peut d'ailleurs être le même que celui contenu dans le premier réservoir du dispositif selon l'invention. La réduction des risques d'inflammation et d'explosion obtenu grâce au procédé selon l'invention est satisfaisante à un point tel que ledit procédé peut être associé à un procédé de récupération des gaz de décomposition consistant à récupérer lesdits gaz dans des conditions de pression inférieure à 50 bars, de tempétrue inférieure à 450° C et de concentration en oxygène inférieure à 5%. Il est important de noter que le progrès et le succès du procédé selon l'invention sont tels que la température dans la phase de récupération des gaz pourra être supérieure à celle prévue selon l'art antérieur.

Enfin le procédé selon l'invention peut avantageusement être associé, en vue de réduire encore les risques d'inflammation et d'explosion, à un procédé consistant à évacuer les gaz de décomposition dans un dispositif d'évacuation comprenent:

— un collecteur de volume compris entre 2 et 100 fois le volume de l'enceinte sous pression à partir de laquelle lesdits gaz sont évacués,
— au moins une conduite de liaison entre l'enceinte et ledit collecteur, et
— au moins une, de préférence une seule, cheminée reliant le collecteur à l'extérieur.

Dans ce cas, le dispositif selon l'invention est de préférence disposé de manière telle que le liquide inerte soit injecté par le dispositif disperseur dans le collecteur.

**Revendications**

1. Procédé pour réduire les risques d'inflammation et d'explosion résultant de la décomposition de l'éthylène dans une enceinte sous haute pression munie d'au moins un organe de protection selon lequel les gaz de décomposition sont refroidis par l'injection, dans le circuit d'évacuation desdits gaz, d'un liquide inerte — c'est-à-dire non réactif vis-à-vis de l'éthylène et des gaz de décomposition — de chaleur de vaporisation élevée, caractérisé en ce qu'on commence à effectuer le refroidissement des gaz de décomposition avec un temps de retard, par rapport au début de l'écoulement desdits gaz en dehors de l'enceinte, qui n'est pas supérieur à 25 millisecondes mais qui est inférieur ou égal au temps de parcours moyen des gaz entre ledit organe de protection et l'endroit où s'effectue le refroidissement des gaz.

2. Procédé selon la revendication 1, caractérisé en ce que le liquide inerte est injecté selon un débit massique variable dans le temps et qui reste à tout instant de l'évacuation supérieur au débit massique des gaz de décomposition.

3. Procédé selon la revendication 2, caractérisé en ce que le liquide inerte de chaleur de vaporisation élevée contenu dans un réservoir est surmonté par une phase de gaz inerte — c'est-à-dire substantieilement exempt de gaz capables de réagir soit avec les gaz de décomposition soit avec le liquide inerte — sous pression comprise entre 5 et 50 bars.

4. Procédé selon la revendication 3, caractérisé en ce que le débit massique Q de liquide inerte varie en fonction du temps t selon la loi:

$$Q = Q_{e,o} \left( 1 + \frac{\gamma_g + 2}{2} \cdot \frac{Q_{e,o}}{V_o \rho} t \right)^{-\frac{\gamma_g}{\gamma_g + 2}}$$

$Q_{e,o}$ étant le débit massique initial des gaz de décomposition provenant de l'enceinte sous pression,

$\gamma_g$ étant le coefficient de la loi des gaz parfaits du gaz inerte surmontant le liquide inerte,

$V_o$ étant le volume initial de la phase gazeuse surmontant le liquide inerte, et

étant la masse volumique du liquide inerte.

5. Procédé selon l'une des revendications 3 et 4, caractérisé en ce que le débit massique initial $Q_{e,o}$ des gaz de décomposition provenant de l'enceinte sous haute pression et le volume initial $V_o$ de la phase de gaz inerte surmontant le liquide inerte sont tels que le rapport $Q_{e,o}/V_o$ soit compris entre 0,3 et 5 t/s/m3.

6. Procédé selon l'une des revendications 2 à 5, caractérisé en ce que le liquide inerte de chaleur de vaporisation élevée est l'eau.

7. Procédé selon l'une des revendications 3 à 6, caractérisé en ce que le gaz inerte est choisi parmi l'azote, le dioxyde de carbone, l'éthylène, l'hélium, l'argon, le néon, le krypton et le xénon.

8. Procédé selon l'une des revendications 3 à 7, caractérisé en ce que le volume initial du liquide inerte représente de 50 à 80% du volume total des phases liquide et gazeuse inertes.

9. Procédér selon l'une des revendications 1 à 8, caractérisé en ce qu'on maintient sous atmosphère d'un gaz inerte au moins une partie du circuit d'évacuation des gaz de décomposition.

10. Procédé selon l'une des revendications 1 à 9, caractérisé en ce que les gaz de décomposition sont récupérés, après leur évacuation, dans des conditions de pression inférieure à 50 bars, de concentration en oxygène inférieure à 5% et de température inférieure à 450° C.

11. Procédé selon l'une des revendications 1 à 10, caractérisé en ce que les gaz de décomposition sont évacués dans un dispositif comprenant:

— un collecteur de volume compris entre 2 et 100 fois le volume de l'enceinte sous pression à partir de laquelle lesdits gaz sont évacués,

— au moins une conduite de liaison entre l'enceinte et ledit collecteur, et

— au moins une, de préférence une seule, cheminée reliant le collecteur à l'extérieur.

12. Dispositif pour la mise en oeuvre du procédé selon la revendication 3, caractérisé en ce qu'il comprend:

— un premier réservoir rempli d'un gaz inerte sous une pression P comprise entre 5 et 50 bars environ,

— un second réservoir raccordé au premier réservoir par une liaison courte et de section importante, ledit second réservoir étant totalement rempli d'un liquide inerte de chaleur de vaporisation élevée,

— une conduite de liaison de longueur $L_o$ et de section $S_o$, disposée entre le second réservoir et le volume dans lequel l'éthylène décomposé provenant de l'enceinte sous pression est évacué, dont l'extrémité proche dudit volume est munie d'un dispositif disperseur de liquide inerte, et

— une vanne de section $S_1$ et de longueur $L_1$, disposée entre le premier réservoir et le dispositif disperseur de liquide inerte, dont l'ouverture est commandée par un dispositif détecteur de l'ouverture d'un organe de protection de l'enceinte sous pression et commande le fonctionnement du dispositif disperseur,

et en ce que les géométries de la conduite de liaison et de la vanne sont reliées entre elles et avec le débit massique initial $Q_o$ de liquide inerte de telle sorte que

$$Q_o \left( \frac{L_o}{S_o} + \frac{L_1}{S_1} \right)$$

ne soit pas supérieure à 22 t/m/s.

13. Dispositif selon la revendication 12, caractérisé en ce que la vanne est une vanne pyrotechnique disposée entre le second réservoir et le dispositif disperseur.

14. Dispositif selon l'une des revendications 12 et 13, caractérisé en ce que le dispositif disperseur de liquide inerte comporte un ensemble d'orifices de section totale S et en ce que, étant la masse volumique du liquide inerte,

$$\frac{S\sqrt{\rho P}}{Q_o}$$

soit compris entre 1 et 4, S, P et $Q_o$ étant exprimés en unités du système international.

**Patentansprüche**

1. Verfahren zur Verringerung der Entzündungs- und Explosionsgefahr infolge des Zerfalls von Äthylen in einem umschlossenen, unter hohem Druck stehenden und mit mindestens einem Schutzorgan versehenen Raum, gemäß welchem Verfahren die Spaltgase durch Einspritzung einer inerten, d. h. mit dem Äthylen und den Spaltgasen nicht reagierenden Flüssigkeit erhöhter Verdampfungswärme in den Evakuierungskreis der genannten Gase gekühlt werden, dadurch gekennzeichnet, daß man mit dem Kühlen der Spaltgase mit einer Zeitverzögerung in bezug auf den Beginn des Auströmens der Spaltgase aus dem umschlossenen Raum beginnt, die nicht mehr als 25 ms beträgt, jedoch geringer als die oder gleich der durchschnittliche(n) Strömungsdauer der Gase zwischen dem genannten Schutzorgan und der Stelle, wo die Kühlung des Gases stattfindet, ist.

2. Verfahren nach Anspruch 1, dadurch gekennzeichnet, daß die inerte Flüssigkeit mit einer zeitveränderlichen Strömungsmenge eingespritzt wird, die zu jedem Zeitpunkt der Evakuierung größer ist als die Strömungsmenge der Spaltgase.

3. Verfahren nach Anspruch 2, dadurch gekennzeichnet, daß die in einem Behälter enthaltene inerte Flüssigkeit erhöhter Verdampfungswärme von einer inerten, d. h. einer im wesentlichen von mit den Spaltgasen oder der inerten Flüssigkeit reaktionsfähigen Gasen freien Gasphase unter einem Druck zwischen 5 und 50 bar überlagert ist.

4. Verfahren nach Anspruch 3, dadurch gekennzeichnet, daß die Strömungsmenge Q der inerten Flüssigkeit in Abhängigkeit von der Zeit t entsprechend dem Gesetz variiert:

$$Q = Q_{e,o} \left( 1 + \frac{\gamma_g + 2}{2} \cdot \frac{Q_{e,o}}{V_o \rho} t \right)^{-\frac{\gamma_g}{\gamma_g + 2}}$$

worin

$Q_{e,o}$ die anfängliche Strömungsmenge der aus dem umschlossenen, unter Druck stehenden Raum kommenden Spaltgase,
$\gamma_g$ den Idealgasgesetzkoeffizienten des die inerte Flüssigkeit überlagernden inerten Gases,
$V_o$ das anfängliche Volumen der die inerte Flüssigkeit überlagernden Gasphase und
$\rho$ die Dichte der inerten Flüssigkeit bedeuten.

5. Verfahren nach Anspruch 3 oder 4, dadurch gekennzeichnet, daß die anfängliche Strömungsmenge $Q_{e,o}$ der aus dem umschlossenen, unter hohem Druck stehenden Raum kommenden Spaltgase und das anfängliche Volumen $V_o$ der die inerte Flüssigkeit überlagernden inerten Gasphase derart sind, daß das Verhältnis $Q_{e,o}/V_o$ zwischen 0,3 und 5 t/s/m³ beträgt.

6. Verfahren nach einem der Ansprüche 2 bis 5, dadurch gekennzeichnet, daß die inerte Flüssigkeit erhöhter Verdampfungswärme Wasser ist.

7. Verfahren nach einem der Ansprüche 3 bis 6, dadurch gekennzeichnet, daß das inerte Gas ausgewählt ist aus der Gruppe bestehend aus Stickstoff, Kohlendioxid, Äthylen, Helium, Argon, Neon, Krypton und Xenon.

8. Verfahren nach einem der Ansprüche 3 bis 7, dadurch gekennzeichnet, daß das anfängliche Volumen der inerten Flüssigkeit 50 bis 80% des Gesamtvolumens der inerten Flüssig- und Gasphasen ausmacht.

9. Verfahren nach einem der Ansprüche 1 bis 8, dadurch gekennzeichnet, daß zumindest ein Teil des Evakuierungskreises der Spaltgase unter einer inerten Gasatmosphäre gehalten wird.

10. Verfahren nach einem der Ansprüche 1 bis 9, dadurch gekennzeichnet, daß die Spaltgase nach ihrer Evakuierung unter einem Druck unterhalb 50 bar und bei einer Sauerstoffkonzentration unter 5% und einer Temperatur unter 450° C rückgewonnen werden.

11. Verfahren nach einem der Ansprüche 1 bis 10, dadurch gekennzeichnet, daß die Spaltgase in eine Einrichtung evakuiert werden, die enthält:

— einen Sammler mit einem Volumen zwischen dem 2- und 100fachen Volumen des umschlossenen, unter Druck stehenden Raumes, aus dem die Spaltgase evakuiert werden,
— mindestens eine Verbindungsleitung zwischen dem umschlossenen Raum und dem genannten Sammler, und
— mindestens einen, vorzugsweise einen einzigen, den Sammler mit der Außenatmosphäre verbindenden Abzugsschacht.

12. Vorrichtung zur Durchführung des Verfahrens nach Anspruch 3, dadurch gekennzeichnet, daß sie enthält:

— einen mit einem unter einem Druck P zwischen etwa 5 und 50 bar stehenden inerten Gas gefüllten ersten Behälter,
— einen an den ersten Behälter mittels einer kurzen Verbindung beträchtlichen Querschnittes angeschlossenen zweiten Behälter, der zur Gänze mit einer inerten Flüssigkeit erhöhter Verdampfungswärme gefüllt ist,
— eine Verbindungsleitung einer Länge $L_o$ und eines Querschnittes $S_o$, welche zwischen dem zweiten Behälter und dem Volumen, in den das von dem umschlossenen, unter Druck stehenden Raum kommende gespaltene Äthylen evakuiert wird, angeordnet ist und deren dem genannten Volumen benachbartes Ende mit einer Einrichtung zum Versprühen inerter Flüssigkeit versehen ist, und
— ein Ventil mit einem Querschnitt $S_1$ und einer Länge $L_1$, das zwischen dem ersten Behälter und der Einrichtung zum Versprühen inerter Flüssigkeit angeordnet ist, wobei das Öffnen des Ventils, durch eine Einrichtung zum Abfühlen des Öffnens eines Schutzorgans des umschlossenen, unter Druck stehenden Raumes gesteuert wird und die Funktion der Sprüheinrichtung steuert, und daß die Geometrie der Verbindungsleitung und des Ventils untereinander und mit der anfänglichen Strömungsmenge $Q_o$ der inerten Flüssigkeit so in Beziehung stehen, daß

$$Q_o \left( \frac{L_o}{S_o} + \frac{L_1}{S_1} \right)$$

nicht größer als 22 t/m/s ist.

13. Vorrichtung nach Anspruch 12, dadurch gekennzeichnet, daß das Ventil ein pyrotechnisches Ventil ist, das zwischen dem zweiten Behälter und der Sprüheinrichtung angeordnet ist.

14. Vorrichtung nach Anspruch 12 oder 13, dadurch gekennzeichnet, daß die Einrichtung zum Versprühen inerter Flüssigkeit eine Anzahl von Öffnungen mit einem Gesamtquerschnitt S besitzt und daß, wenn P die Dichte der inerten Flüssigkeit ist,

$$\frac{S \sqrt{\rho P}}{Q_o}$$

zwischen 1 und 1,4 liegt, wobei S, P und $Q_o$ in Einheiten des Si-Systems ausgedrückt sind.

## Claims

1. A process for reducing the danger of ignition and explosion due to the decomposition of ehtylene in a high-pressure comprising at least one safety means, comprising cooling the decomposition gases by injecting, into the evacuation circuit of said gases, an inert liquid — i.e. non reactive with ethylene and the decomposition gases — of high heat of vaporization, characterized in that cooling of the decomposition gases is effected with a delay, from the time the gases begin to flow out of the vessel, not exceeding 25 milliseconds but equal to or less than the average time for the gases to pass between the safety means and the place where the gases are colled.

2. A process according to claim 1, characterized in that the inert liquid is injected at a time-variable mass flow-rate which at all times during the evacuation is maintained greater than the mass flow-rate of the decomposition gases.

3. A process according to claim 2, characterized in that said inert liquid of high heat of vaporization is contained in a tank and is maintained under an inert gas phase — i.e. substantially free of gases that may react either with the decomposition gases or with the inert liquid — under a pressure between 5 and 50 bars.

4. A process according to claim 3, characterized in that the mass flow rate Q of the inert liquid varies as a function of time t according to the equation

$$Q = Q_{e,o} \left( 1 + \frac{\gamma_g + 2}{2} \cdot \frac{Q_{e,o}}{V_o \rho} t \right)^{- \frac{\gamma_g}{\gamma_g + 2}}$$

$Q_{e,o}$ is the initial mass flow-rate of the decomposition gases from the pressurized vessel;

$\gamma_g$ is the heat-capacity ratio of the inert gas above the inert liquid;

$V_o$ is the initial volume of the gaseous phase above the inert liquid; and

$\varrho$ is the desnity of the inert liquid.

5. A process according to any of claims 3 and 4, characterized in that the initial mass flow-rate $Q_{e,o}$ of the decomposition gases coming from the high-pressure vessel and the initial volume $V_o$ of the inert gas phase above the inert liquid are such that the ratio $Q_{e,o}/V_o$ is between 0.3 and 5 t/s/m3.

6. A process according to any of claims 2 to 5, characterized in that the inert liquid with high heat of vaporization is water.

7. A process according to any of claims 3 to 6, characterized in that the inert gas is selected from the group consisting of nitrogen, carbon dioxide, ethylene, helium, argon, neon, krypton, and xenon.

8. A process according to any of claims 3 to 7, characterized in that the initial volume of the inert liquid amounts to 50 to 80% of the total volume of the inert gas and liquid phases.

9. A process according to any of claims 1 to 8, characterized in that at least part of the decomposition-gas evacuation-circuit is kept under an inert gas atmosphere.

10. A process according to any of claims 1 to 9, characterized in that the decomposition gases are received, following their evacuation, at a pressure less than 50 bars, an oxygen concentration less than 5%, and a temperature less than 450° C.

11. A process according to any of claims 1 to 10, characterized in that the decomposition gases are evacuated into a system comprising:

(a) a reservoir with a volume 2 to 100 times that of the pressurized vessel from which said gases are evacuated;

(b) at least one connecting pipe between the vessel and said reservoir; and

(c) at least one, preferably one single, chimney connecting the reservoir to the atmosphere.

12. Apparatus for carrying out the process according to claim 3, characterized in that it comprises:

— a first tank containing an inert gas at a pressure P between about 5 and 50 bars,

— a second tank connected to said first tank by a short connecting means that has a large corss-section, said second tank being completely filled with an inert liquid of high heat of vaporization,

— a connecting pipe of length $L_o$ and cross-section $S_o$ located between the second tank and the circuit into which the decomposed ethylene issuing from the pressurized vessel is evacuated, an inert liquid dispersing means being located at the end of said connecting pipe and near said evacuation circuit,

— a valve of cross-section $S_1$ and length $L_1$ located between the first tank and the inert liquid dispersing means, the opening of which is operated by a means for detecting the opening of a safety means of the pressurized vessel and operates the working of the dispersing means,

and characterized in that the geometries of the connecting pipe and of the valve and the initial inert liquid mass flow rate $Q_o$ are interrelated in such a manner that $Q_o(L_o/S_o + L_1/S_1)$ does not exceed 22 t/m/s.

13. Apparatus according to claim 12, characterized in that said valve is an explosive valve located between the second tank and the dispersing means.

14. Apparatus according to any of claims 12 and 13, characterized in that the inert liquid dispersing means comprises a set of orifices of total cross-section S and

$$\frac{S\sqrt{\rho P}}{Q_o}$$

is between 1 and 1.4, wherein $\rho$ is the density of the inert liquid and S, P, and $Q_o$ are expressed in the International System of Units.

Fig. 1